# EUROPEAN PATENT APPLICATION

(11) **EP 4 049 534 A1**
(43) Date of publication of application: **31.08.2022**
(21) Application number: 20868392.0
(22) Date of filing: 15.09.2020
(51) Int. Cl.: A01K 61/95, G06M 7/00

(54) **FISH COUNTING SYSTEM, FISH COUNTING METHOD, AND PROGRAM**

(30) Priority: 27.09.2019 JP 2019177654
(71) Applicant: Yanmar Power Technology Co., Ltd., Osaka-shi Osaka 530-0013 (JP)
(72) Inventor: DAKE, Yuichiro, Osaka-shi Osaka 530-0013 (JP); UEDA, Yasuhiro, Osaka-shi Osaka 530-0013 (JP); WAKABAYASHI, Isao, Osaka-shi Osaka 530-0013 (JP); SAKAI, Toshiaki, Itami-shi Hyogo 664-0851 (JP); TANI, Makoto, Itami-shi Hyogo 664-0851 (JP)
(74) Representative: Novagraaf International SA
(86) International application number: PCT/JP2020/034937
(87) International publication number: WO 2021/060078

(57) **Abstract**

This fish counting system (3) comprises: an image acquisition unit (30) that acquires a plurality of images obtained by capturing, over time, images of a photographing area in which a fluid including a fish (1) flows; an extraction unit (31) that extracts a fish in each image; and a counting unit (34) that counts the number of fish. The photographing area has a first area (Ar1) and a second area (Ar2). The counting unit (34) counts the fish when the fish in the first area (Ar1) moves to the second area (Ar2).

## Description

### TECHNICAL FIELD

The present disclosure relates to a fish counting system, a fish counting method, and a program.

### BACKGROUND ART

It is desirable to accurately determine the number of fish in cultivation of tuna and other fish to reduce feed costs and planed production. In general, fish are counted by transferring the fish from a first fish tank to a second fish tank and photographing the transferring fish. A number of fish are visually counted while a recorded moving image is slowly reproduced, and therefore, man-hour is increased and accuracy is deteriorated.

Patent Document 1 discloses a system for counting fish based on a plurality of captured images. The system estimates a position of a fish in an image of interest based on positions of the fish in a plurality of past images, and when the fish is in the estimated position in the image of interest, counts the number of fish as correct.

### CITATION LIST

### Patent Literature

Patent Literature 1 : Japanese Unexamined Patent Application Publication No. 2016-165238

### DISCLOSURE OF INVENTION

### PROBLEMS TO BE SOLVED BY THE INVENTION

However, the method in which the counting is conditioned only on matching of an estimated movement of the fish based on the plurality of images as described above may not determine whether the fish is truly the one to be counted, which may lead to miscounting. In particular, there is a risk of counting migratory fish that should not be counted, because it is not possible to distinguish between fish to be counted that have arrived from another fish tank and fish that have already been counted and are migrating in a fish tank.

The present disclosure provides a fish counting system, a fish counting method, and a program that may reduce the number of times miscounting is performed.

### MEANS FOR SOLVING THE PROBLEMS

A fish counting system according to the present disclosure includes an image acquisition unit that acquires a plurality of images obtained by imaging over time an imaging area in which fluid including a fish flows, an extraction unit that extracts a fish for each image, and a counting unit that counts the number of fish. The imaging area includes a first area and a second area. The counting unit counts the number of fish when the fish in the first area has moved to the second area.

### EFFECT OF THE INVENTION

In this way, since fish are counted when it is determined that the fish in the first area have moved to the second area, fish to be counted that have arrived from another fish tank or the like can be counted. Nevertheless, even when a migrating fish is captured in an image, the migrating fish does not move from the first area to the second area, and therefore, miscounting of migrating fish may be reduced or avoided.

### BRIEF DESCRIPTION OF DRAWINGS

FIG. 1 is a block diagram illustrating a fish counting system of this embodiment.
FIG. 2 is a diagram illustrating a captured image.
FIG. 3 is a flowchart of a process performed by the fish counting system.
FIG. 4 is a flowchart of a labeling process performed by the fish counting system.
FIG. 5 is an explanatory diagram of a removal process of removing a fish as a processing target from extracted fish.
FIG. 6 is an explanatory diagram of a first process of labeling.
FIG. 7 is an explanatory diagram of a second process of the labeling.
FIG. 8 is an explanatory diagram of a third process of the labeling.
FIG. 9 is an explanatory diagram of a fifth process of the labeling.
FIG. 10 is an explanatory diagram of a seventh process of the labeling.
FIG. 11 is an explanatory diagram of an eighth process of the labeling.
FIG. 12 is a transition diagram illustrating statuses set by a status setting unit.
FIG. 13 is an explanatory diagram illustrating a case where a fish to be added and a fish not to be added intersect with each other.
FIG. 14 is a flowchart of an example of a process performed by a reporting unit.
FIG. 15 is a flowchart of another example of a process performed by a reporting unit.

### DESCRIPTION OF EMBODIMENTS

Hereinafter, an embodiment of the present disclosure will be described with reference to the drawings.

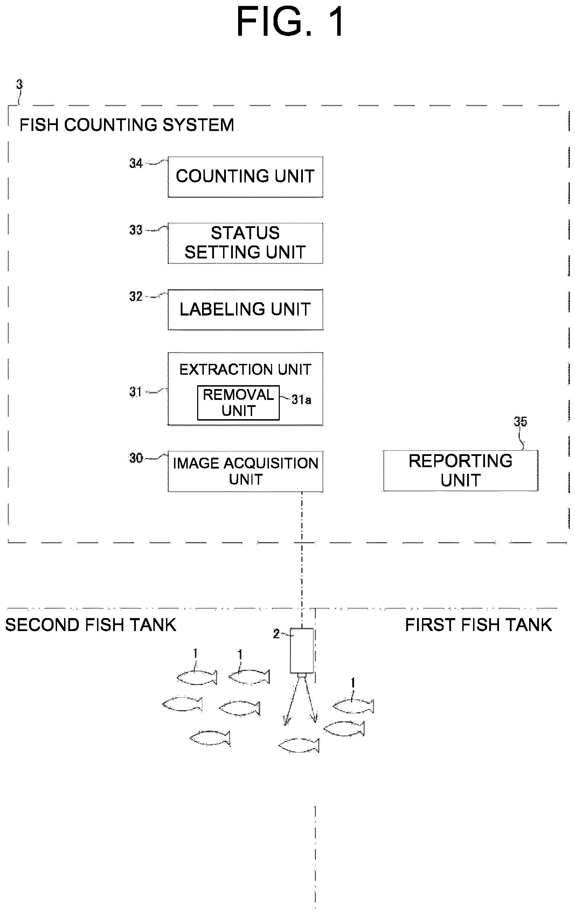

As shown in FIG. 1, a fish counting system 3 counts the number of fish based on a plurality of images. The plurality of images are obtained by using a camera 2 capturing images over time of an imaging area in which fluid including fish 1 flows. FIG. 1 is an example in which a first fish tank and a second fish tank are directly connected, and fish, such as tuna, are transferred from the first fish tank to the second fish tank. Using a camera installed near a gate of the second fish tank, fish that are moved into the second fish tank are counted to determine the total number of fish.

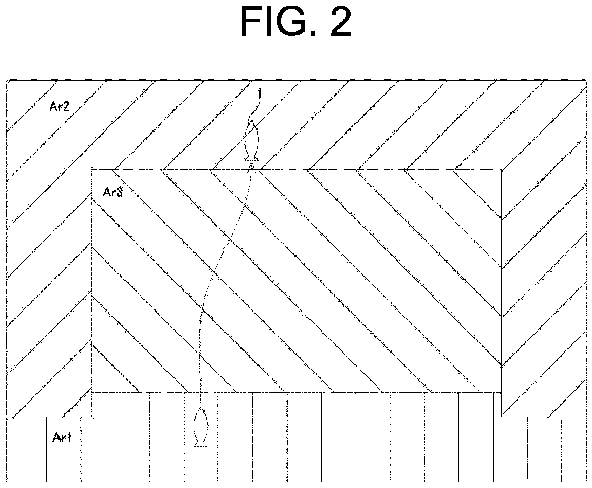

FIG. 2 is a diagram illustrating a captured image. The camera 2 is installed in a predetermined direction. The predetermined direction is determined such that, as shown in FIG. 2, a portion of a frame of the image is determined as a first area Ar1, the other portion of the frame is determined as a second area Ar2, and the first area Ar1 is closer to the first fish tank. By installing the camera 2 in such a predetermined direction, the fish moving from the first fish tank to the second fish tank always pass through the first area Ar1 before reaching the second area Ar2. In FIG. 2, one of the four sides is set as the first area Ar1, and the remaining three sides are set as the second area Ar2, but the setting is not limited to this.

In addition, since fish often pass through the center of the image, the imaging area has a third area Ar3 between the first area Ar1 and the second area Ar2. The third area Ar3 is located in a center portion of the image. With this arrangement, a fish 1 that leaves the first area Ar1 does not immediately reach the second area Ar2 and is captured in the third area Ar3 in a plurality of images. Therefore, recognition accuracy may be improved. Note that the third area Ar3 may be omitted.

As shown in FIG. 1, the fish counting system 3 includes an image acquisition unit 30, an extraction unit 31, a labeling unit 32, a status setting unit 33, and a counting unit 34. The fish counting system 3 may include a reporting unit 35 where appropriate. Each of these units 30 to 35 is realized by the cooperation of hardware and software by executing a predetermined program on one or more processors included in a computer.

The image acquisition unit 30 shown in FIG. 1 acquires a plurality of images by capturing the imaging area in which fluid including the fish 1 flows on a time-series basis. The camera 2 captures a moving image at 30 fps (Flames Per Second), for example, and the moving image is stored in the system 3. The image acquisition unit 30 acquires a plurality of images from the moving image. The plurality of images are arranged in a time-series manner. In this specification, one image is referred to as one frame where appropriate.

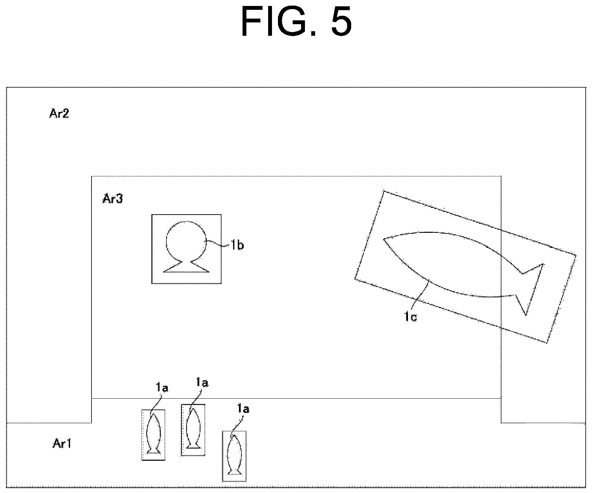

The extraction unit 31 shown in FIG. 1 extracts the fish 1 from the individual images. Here, an object is recognized by means of image processing, and therefore, the object is not strictly determined as a fish but recognized as an object in water. Therefore, not only fish, but also floating objects may be recognized as fish. The extraction unit 31 preferably includes a removal unit 31a. The removal unit 31a removes a fish that satisfies a predetermined removal condition from extracted fish 1. Examples of the predetermined removal condition include a size of the fish being out of a specified range and an aspect ratio of the fish being out of a specified range. For example, as shown in FIG. 5, among extracted fish la, 1b, and 1c, the fish 1b is close to square and its aspect ratio is out of the specified range, and fish 1c is too large and its size is out of the specified range. Therefore, the fish 1b and the fish 1c are removed from the extracted fish. In practice, the removal unit 31a causes the status setting unit 33 to set a status of err_no_target_no_track to the fish to be removed. This status indicates that there is no target of addition and no tracking is to be performed.

The labeling unit 32 shown in FIG. 1 assigns a label to the fish 1 extracted by the extraction unit 31 to identify the individual fish. Fish to which the same label is given in the plurality of images are the same individual, and a trajectory of the fish may be determined by a change in position of the fish with the same label. In this embodiment, the label is used as an ID, and a number is used as the ID, but the embodiment is not limited to this. The details will be described later.

The status setting unit 33 shown in FIG. 1 sets a status to fish to which the label has been assigned by the labeling unit 32. Examples of the status include a status indicating that the fish is a target of addition, a status indicating that the fish is not a target of addition, and a status indicating that the fish is a target of tracking. The details will be described later, but at least the status indicating that the fish is a target of addition can be set.

The counting unit 34 shown in FIG. 1 counts the number of fish. The counting unit 34 is configured to count (add) the fish 1 when the fish 1 in the first area Ar1 has moved to the second area Ar2. The specific configuration to achieve this operation is as follows.

### Overall Flow

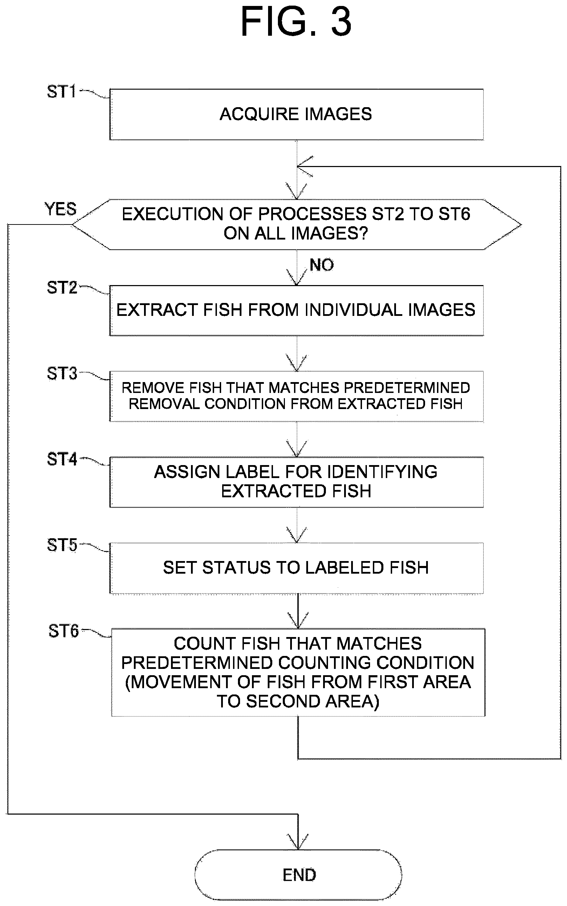

First, an entire operation of the fish counting system 3 will be described. As illustrated in FIG. 3, in step ST1, the image acquisition unit 30 acquires a plurality of images by capturing the imaging area in which fluid including fish flows on a time-series basis. Step ST2 to step ST6 are performed for each image. In other words, a process in step ST2 to step ST6 is executed for all images 1 to M (where M is the number of acquired images). Subsequently, in step ST2, the extraction unit 31 extracts the fish from the individual images. Thereafter, in step ST3, the removal unit 31a removes fish that satisfy the predetermined removal condition from the extracted fish. Then, in step ST4, the labeling unit 32 assigns a label to the extracted fish to identify the individual. Subsequently, in step ST5, the status setting unit 33 sets a status for the labeled fish. Thereafter, in step ST6, the counting unit 34 counts the fish that satisfy a predetermined counting condition. The predetermined counting condition is that the fish in the first area Ar1 has moved to the second area Ar2. Specifically, the condition is that a status indicating a target of addition is set. Step ST3 may be omitted, as another method may be may be implemented.

### Labeling; Tracking Process

The labeling unit 32 shown in FIG. 1 performs the tracking process of assigning the same label to the same individual. In the tracking process, when a first fish in an image of interest and a second fish in one or more images in the past than the image of interest satisfy a first tracking enabling condition, the same label as to the second fish is assigned to the first fish. This means that a comparison between one image of interest and one past image or a comparison between one image of interest and two or more past images may be performed.

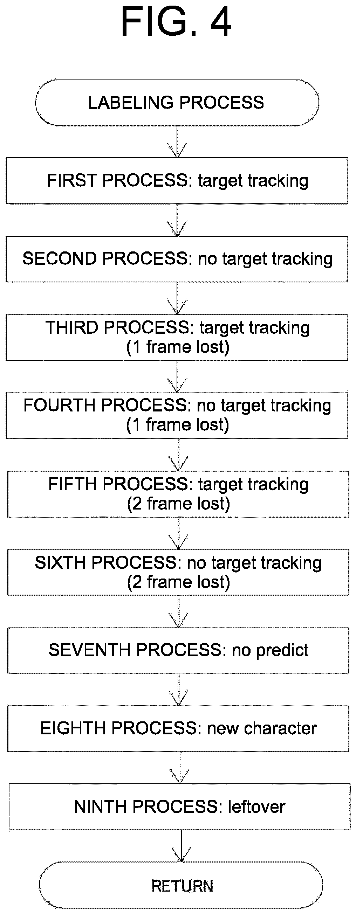

Specifically, as shown in FIG. 4, the labeling unit 32 executes a plurality of processes (first to eighth processes) in order as a tracking process. Therefore, the first tracking enabling condition includes a plurality of conditions (first to eighth conditions), and when any of the first to eighth conditions is satisfied, the first tracking enabling condition is satisfied and the tracking process is completed for a fish that satisfies the condition. As shown in FIG. 4, the labeling process includes first to eight processes of assigning the same label as an existing label, and a ninth process of assigning a label to identify a new individual.

### Labeling: First Process

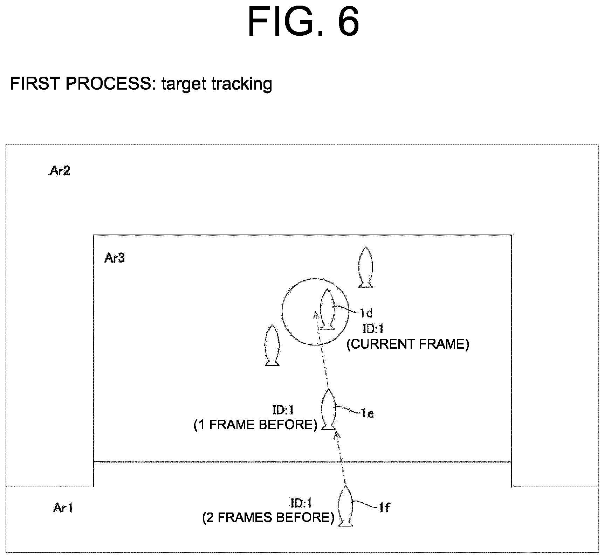

The first process (target tracking) is performed on a fish of a target of addition. In the first process, as shown in FIG. 6, when a first fish 1d in the image of interest (an image to be labeled) and second fish 1e, 1f in past images one and two images before the image of interest satisfy the first condition, the same label as to the second fish 1e and 1f is assigned to the first fish 1d. Specifically, the first condition is that a position of the fish in the image of interest is estimated based on positions of the second fish 1e and 1f in past images in one and two images before the image of interest (estimation based on an amount of movement) and the first fish 1d is included in a circle of a predetermined size having the estimated position of a fish as a center. In FIG. 6, the same label as to the second fish 1e and 1f (ID: 1) is assigned to the first fish 1d.

### Labeling: Second Process

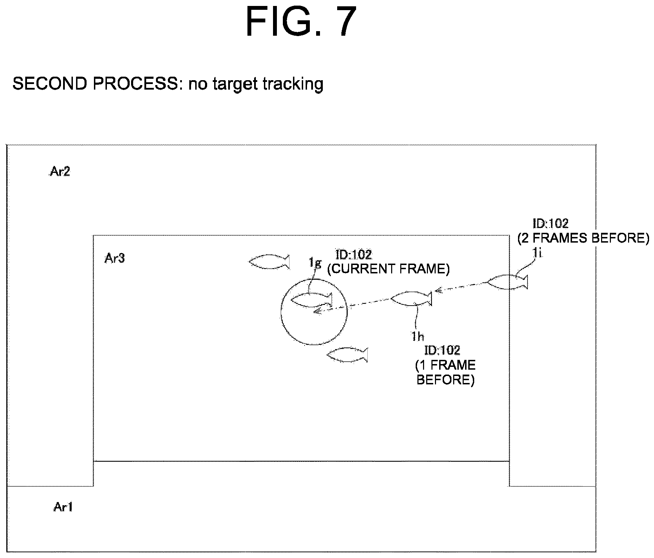

The second process (no target tracking) is performed on a fish that is not a target of addition. In the second process, as shown in FIG. 7, when a first fish 1g in an image of interest (an image to be labeled) and second fish 1h and 1i in past images one and two images before the image of interest satisfy the second condition, the same label as to the second fish 1h and 1i is assigned to the first fish 1g. Specifically, the second condition is that a position of the fish in the image of interest is estimated based on positions of the second fish 1h and 1i in past images one and two images before the image of interest (estimation based on an amount of movement) and the first fish 1g is included in a circle of a predetermined size having the estimated position of a fish as a center. In FIG. 7, the same label as to the second fish 1h and 1i (ID: 102) is assigned to the first fish 1g.

### Labeling: Third and Fourth Processes

The third process (target tracking (one frame lost)) is performed on a fish of a target of addition. The fourth process (no target tracking (one frame lost)) is performed on a fish that is not a target of addition. The third and fourth processes both enable tracking even in a lost state in which a fish is lost in a past image immediately before (one image before) the image of interest.

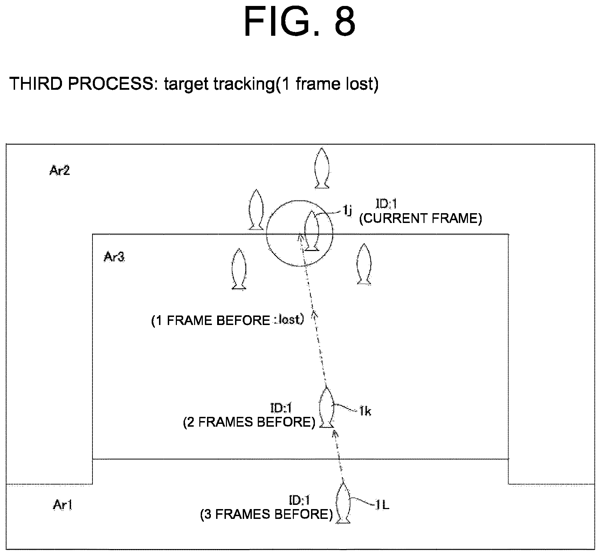

In the third process, as shown in FIG. 8, when a fourth fish 1j in an image of interest and third fish 1k and 1L in past images two and three images before the image of interest satisfy the third condition, the same label as to the third fish 1k and 1L is assigned to the fourth fish 1j. Specifically, the third condition is that a position of a fish in the image of interest is estimated based on positions of the third fish 1k and 1L in past images two and three images before the image of interest (estimation based on an amount of movement) and the fourth fish 1j that satisfies the estimated fish position and a second tracking enabling condition is included in fish in the image of interest. The second tracking enabling condition is that a fish is closest to the estimated position of a fish, but this may be changed as needed. A description of the fourth process is omitted because the fish to be processed is not a target of addition and content of the process is the same as the third process.

Specifically, in the third and fourth processes, a position of a fish in the image of interest is estimated based on positions of the third fish 1k and 1L in past images two and three images before the image of interest and the same label as to the third fish 1k and 1L is assigned to the fourth fish 1j that satisfies the estimated fish position and the second tracking enabling condition among fish in the image of interest.

### Labeling: Fifth and Sixth Processes

The fifth process (target tracking (two frame lost)) is performed on a fish of a target of addition. The sixth process (no target tracking (two frame lost)) is performed on a fish that is not a target of addition. The fifth and sixth processes both enable tracking even in a lost state in which a fish is lost in past images immediately before (one and two images before) the image of interest.

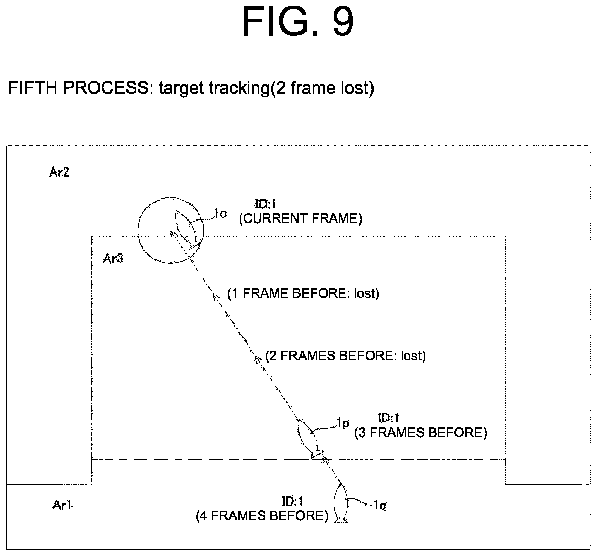

In the fifth process, as shown in FIG. 9, when a fourth fish 1o in an image of interest and third fish 1p and 1q in past images three and four images before the image of interest satisfy the fifth condition, the same label as to the third fish 1p and 1q is assigned to the fourth fish 1o. Specifically, the fifth condition is that a position of a fish in the image of interest is estimated based on positions of the third fish 1p and 1q in past images three and four images before the image of interest (estimation based on an amount of movement) and the fourth fish 1o that satisfies the estimated fish position and the second tracking enabling condition is included in fish in the image of interest. The second tracking enabling condition is that a fish is closest to the estimated position of a fish, but this may be changed as needed. A description of the sixth process is omitted because the fish to be processed is not a target of addition and content of the process is the same as the fifth process.

Specifically, in the fifth and sixth processes, a position of the fish in the image of interest is estimated based on positions of the third fish 1p and 1q in past images three and four images before the image of interest and the same label as to the third fish 1p and 1q is assigned to the fourth fish 1o that satisfies the estimated fish position and the second tracking enabling condition among fish in the image of interest.

### Labeling: Summary of Third to Sixth Processes

Specifically, in the third to sixth processes, a position of a fish in the image of interest is estimated based on positions of the third fish 1k and 1L (1p and 1q) in past images N and N+1 (N is a natural number not less than 2) images before the image of interest and the same label as to the third fish 1k and 1L (1p and 1q) is assigned to the fourth fish 1j (1o) that satisfies the estimated fish position and the second tracking enabling condition among fish in the image of interest. In this embodiment, N of 2 or 3 is implemented, but a process with N of 4 or more may be employed.

### Labeling: Seventh Process

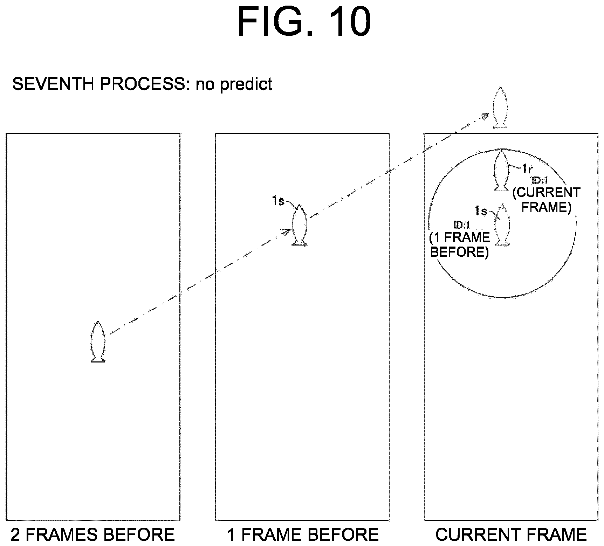

Although the first to six processes use a plurality of past images to assign labels based on estimation of an amount of movement, the estimation may not be correct when a fish is positioned close to an edge of an image. The first to six processes may not cope with a case where a fish stops at an edge of the image. The seventh process (no predict) is performed to cope with this case and is required to be performed after the first to six processes. As shown in FIG. 10, the seventh process assigns the same label as a sixth fish 1s which is a target of addition in a past image one image before the image of interest to a seventh fish 1r which is a closest fish in the image of interest to the sixth fish 1s.

By executing the seventh process, even in a case where the same individual may not be identified by estimating an amount of movement using a plurality of past images (for example, a case where a fish suddenly stops), it is possible to assign a label to the fish as being the same individual, and accordingly, tracking of the fish may be performed.

### Labeling: Eighth Process

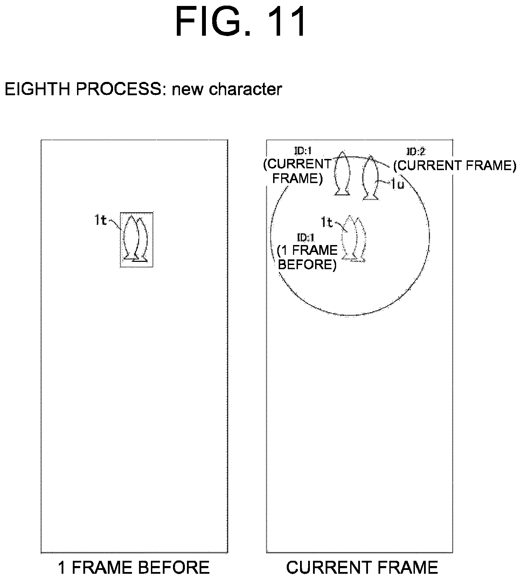

As shown in FIG. 11, the eighth process is appropriate for a case where a plurality of fish, which were recognized as one fish due to their overlap in a past image one image before an image of interest, have split into two. Specifically, as shown in FIG. 11, the eighth process assigns a label (ID = 2) to a fifth fish 1u as a new individual, to which a label has not been assigned in the image of interest, after the tracking process (processes 1 through 6) has been executed. Then, the status setting unit 33 sets a status of the fifth fish 1u to be the same as a status of the fish 1t that is closest to the fifth fish 1u in a past image one image before the image of interest. By this, when the fish 1t is in a status of a target of addition, the fifth fish 1u is also a target of addition. Therefore, even when the fish 1t to be added is branched, the fifth fish 1u is also a target of addition, and therefore, omission of counting of a fish of a target of addition may be suppressed or avoided.

### Labeling: Ninth Process

The ninth process is to assign a new label to a new individual that was not labeled in the first to eighth processes.

### Labeling: Processing Order

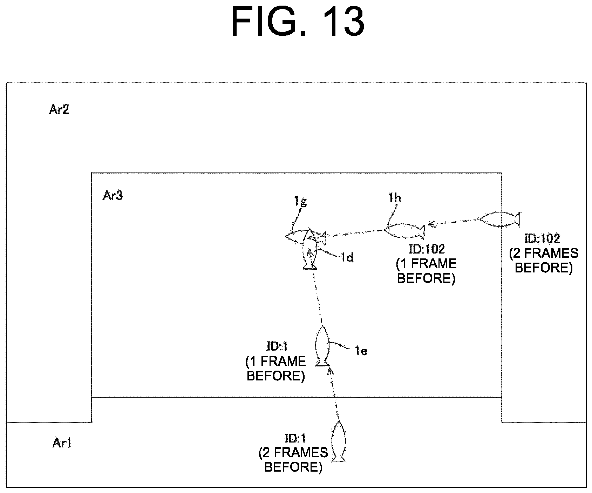

An execution order of the first to sixth processes may be arbitrarily changed. However, when the execution order of the first to sixth processes is arbitrary, the following problems may occur. For example, as shown in FIG. 13, when a fish 1d which is a target of addition and a fish 1g which is not a target of addition intersect with each other in a current frame (image of interest), the labels (IDs) may be swapped. In the example in FIG. 13, IDs are appropriately assigned such that ID of 1 is assigned to the fish 1d in the image of interest and ID of 102 is assigned to the fish 1g in the image of interest. However, for example, when the tracking process is performed on a fish 1h which is not set to be a target of addition before a fish 1e which is set to be a target of addition, the ID of 102 is assigned to the fish 1d in the image of interest, and thereafter, in the tracking process performed on the fish 1e, ID of 1 is assigned to the fish 1g in the image of interest, and accordingly, the labels are swapped in some cases. In particular, when mislabeling of the fish of a target of addition directly leads to an omission in counting, which is not desirable.

Therefore, in this embodiment, the tracking process is performed first on the fish 1e that has been set to be a target of addition, rather than the fish 1h that has not been set as a target of addition. Specifically, the labeling unit 32 assigns numbers in such a way that an ID of a fish of a target of addition becomes smaller and an ID of a fish that is not a target of addition becomes larger. Then, a fish with a smaller ID is tracked first, and a fish with a larger ID is tracked later.

### Status and Counting

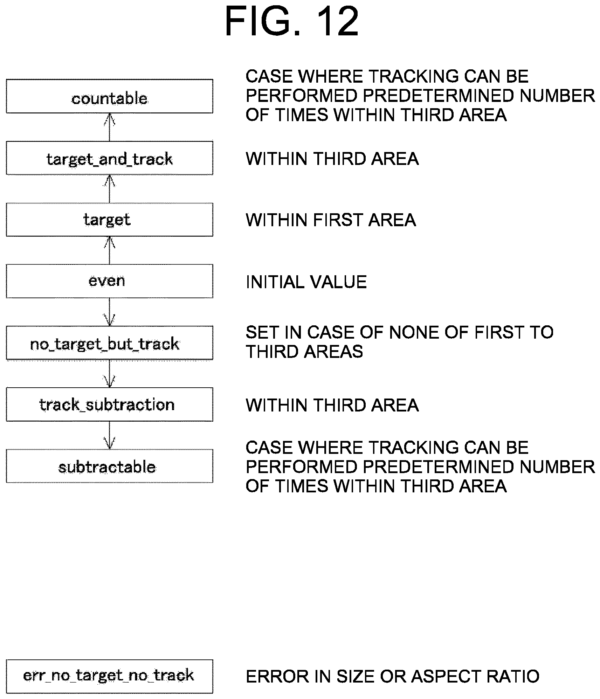

The status setting unit 33 sets statuses shown in FIG. 12. A status "even" is an initial value. Transition from the status "even" to a status "target" or a status "no_target_but_track" is available. The status "target" indicates that a fish is a target of addition and is set when an outermost coordinate of the fish 1 is included in the first area Ar1. Transition from the status "target" to a status "target_and_track" is available. The status "target_and_track" is set when an outermost coordinate of the fish 1 is included in the third area Ar3. In the status "target_and_track", when tracking is enabled in a predetermined number of consecutive images in the third area Ar3 (the first tracking enabling condition is consecutively satisfied a predetermined number of times), the status changes to a status "countable". The predetermined number of times is a natural number equal to or larger than 2. The status "countable" indicates that the fish is a target of addition and may be counted, and when the fish moves to the second area Ar2 in this status, the counting unit 34 counts the fish (increment by 1). In other words, the counting unit 34 is configured to count a fish set as a target of addition when the fish moves to the second area Ar2 after satisfying the first tracking enabling condition a certain number of times in the third area Ar3 in the plurality of images. Of course, the status "countable" may be omitted and the fish may be counted when the fish in the status "target_and_track" moves to the second area Ar2.

The status "no_target_but_track" indicates that the fish is not a target of addition but is a target of tracking, and is set when an outermost coordinate of the fish is not in the first, second, or third area Ar1, Ar2, or Ar3 (when the fish is in the specified outermost edge area). Transition from the status "no_target_but_track" to a status "track_subtraction" is available. The status "track_subtraction" indicates that the fish is a target of subtraction and is set when the fish is in the third area Ar3. Transition from the status "track_subtraction" to a status "subtractable" is available. In the status "track_subtraction", when tracking is enabled in a predetermined number of consecutive images in the third area Ar3 (the first tracking enabling condition is consecutively satisfied a predetermined number of times), the status "subtractable" is entered. The status "subtractable" indicates that the fish is a target of addition and can be subtracted, and when the fish moves to the first area Ar1 in this status, the counting unit 34 decrements the number of fish (decrement by 1). Of course, the status "subtractable" may be omitted and the fish may be counted when the fish in the status "track_subtraction" moves to the first area Ar1. That is, in this embodiment, when a fish that has moved from the second area Ar2 to the first area Ar1 is set to be a target of subtraction, the fish may be calculated by subtraction.

Note that a status "err_no_target_no_track" is set based on a predetermined removal condition when a fish is extracted as described above.

### Reporting Unit

The reporting unit 35 shown in FIG. 1 determines whether an imaging condition is abnormal based on at least one image, and reports to outside that the imaging condition is abnormal when determining that the imaging condition is abnormal. Examples of content of the report include advice on how to improve an installation direction of the camera as a result of determining whether the camera direction is appropriate, a message on correction of an angle in a pan direction and a tilt direction, an indication of normal or abnormal on a screen where a user changes the camera direction, output to a log, and an instruction for correction to an automatic camera direction correction unit.

For example, flatness is calculated by image processing, and when the flatness exceeds a specified range, the flatness is reported as abnormal. Examples of abnormality in flatness include reflection of the sun, a fish net, a structure or a large floating object. Furthermore, turbidity of the seawater is calculated, and when the turbidity exceeds a specified range, the turbidity is reported as abnormal. The turbidity of the seawater may be determined using a contrast ratio between a fish and a background. Furthermore, luminance is calculated to determine whether to be a luminance saturation state, and when the determination is affirmative, the luminance is reported as abnormal. Reflection of direct sunlight causes luminance saturation. Furthermore, luminance abnormality may be reported. This is because, when a net, a structure, or the like appears in the background, luminance degradation occurs.

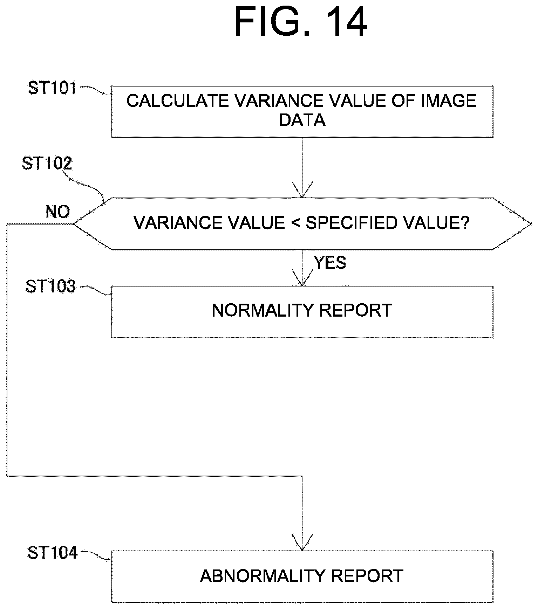

An example is shown in FIG. 14. As shown in FIG. 14, a variance value of image data is calculated in step ST101. Subsequently, in step ST102, it is determined whether the variance value is smaller than a specified value. When it is determined that the variance value is smaller than the specified value in step ST102 (ST 102: YES), it is reported that the variance value is normal in next step ST103. When it is determined that the variance value is not smaller than the specified value in step ST102 (ST 102: NO), it is reported that the variance value is abnormal in next step ST104.

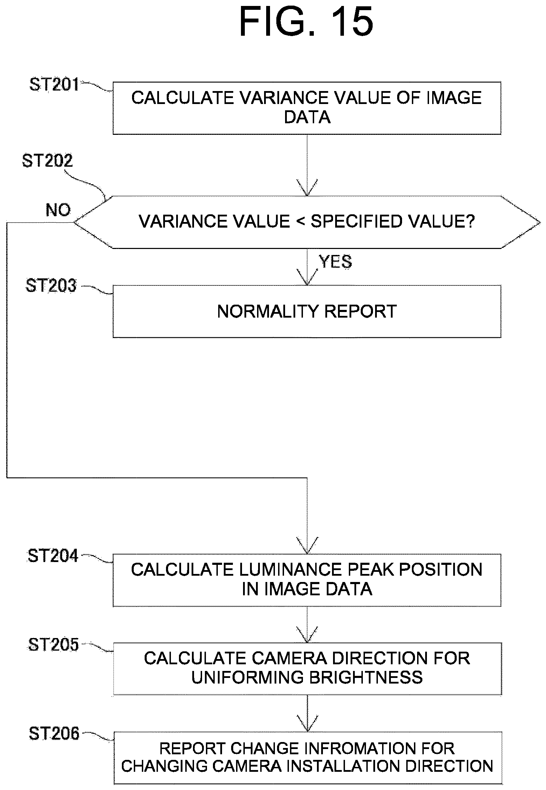

Another example is shown in FIG. 15. As shown in FIG. 15, a variance value of image data is calculated in step ST201. Thereafter, in step ST202, it is determined whether the variance value is smaller than a specified value. When it is determined that the variance value is smaller than the specified value in step ST202 (ST 202: YES), it is reported that the variance value is normal in next step ST203. When it is determined that the variance value is not smaller than the specified value in step ST202 (ST 202: NO), a luminance peak position in the image data is calculated in next step ST204. In next step ST205, a camera direction is calculated to attain uniform brightness. In next step ST206, change information for changing a camera installation direction is reported. The change information may be, for example, a correction angle for a current camera direction. Examples of the correction angle include information on panning of +30 degrees and tilting of -10 degrees.

As described above, the fish counting system 3 of this embodiment includes the image acquisition unit 30 that acquires a plurality of images by imaging an imaging area in which fluid including fish 1 flows over time, the extraction unit 31 that extracts a fish for each image, and a counting unit 34 that counts the number of fish. The imaging area incudes the first area Ar1 and the second area Ar2. The counting unit 34 counts a fish when the fish has moved from the first area Ar1 to the second area Ar2.

The fish counting method of this embodiment includes acquiring a plurality of images by imaging an imaging area in which fluid including fish flows over time, extracting a fish for each image, and counting the number of fish. The imaging area includes a first area and a second area. The counting the number of fish includes counting a fish when the fish in the first area moves to the second area.

In this way, since a fish is counted when the fish has moved from the first area Ar1 to the second area Ar2, when a direction of arrival from another fish tank or the like is set to a direction from the first area Ar1 to the second area Ar2, the fish to be counted coming from the other fish tank or the like may be counted. Nevertheless, even when a migrating fish is captured in an image, the migrating fish does not move from the first area Ar1 to the second area Ar2, and therefore, miscounting of migrating fish may be reduced or avoided.

As in this embodiment, the fish counting system preferably includes the labeling unit 32 that assigns a label to an extracted fish to identify the fish and the status setting unit 33 that sets a status to the fish to which the label is assigned. The status setting unit 33 preferably sets a status indicating a target of addition to the fish in the first area Ar1. The counting unit 34 preferably counts the fish when it is determined that the fish in the first area Ar1 set as the target of addition has moved to the second area Ar2.

In this way, since the labeling is performed, identifying of individual fish and tracking of behavior of the fish may be enabled, and since a status indicating that the fish is a target of addition is set, it may be determined that the fish in the first area Ar1 has moved to the second area Ar2. This is a preferable configuration to determine that a fish in the first area Ar1 has moved to the second area Ar2.

As in this embodiment, when a fish that has moved from the second area Ar2 to the first area Ar1 is set to be a target of subtraction, the counting unit 34 preferably calculates the number of fish.

With this configuration, even when there is a retrograde fish, the fish may be set as a target of subtraction and subtracted, thus accuracy of counting may be improved.

According to this embodiment, the imaging area preferably has a third area between the first and second areas.

In this way, since the third area Ar3 exists between the first area Ar1 and the second area Ar2, a fish of a target of addition moved from the first area Ar1 does not immediately enter the second area Ar2 but passes through the third area Ar3 before reaching the second area Ar2 from the first area Ar1 in many cases. The fish tends to move in a straight line as the fish swims, and therefore, the fish easily reaches the second area Ar2 from the first area Ar1 through the third area Ar3. However, a floating object misidentified as a fish is less likely to reach the second area Ar2 through the third area Ar3. Therefore, miscounting, as a fish, of a floating object that is mistakenly identified as fish may be suppressed.

As in this embodiment, when the first fish 1d (1g) in an image of interest and second fish 1e and 1f (1h and li) in past images one or more images before the image of interest satisfy the first tracking enabling condition, the labeling unit 32 preferably performs a tracking process to assign the same label as to the second fish 1e and 1f (1h and li) to the first fish 1d (1g), and when the fish set as a target of addition moves to the second area Ar2 after consecutively satisfying the first tracking enabling condition a predetermined number of times in the third area Ar3 in the plurality of images, the counting unit 34 preferably counts the fish.

When the first tracking condition is satisfied, it is often recognized that the behavior is that of a fish and not that of a floating object. Furthermore, as mentioned above, when the first tracking condition is consecutively satisfied the predetermined number of times in the third area Ar3, the possibility that it is a fish and not a floating object is extremely high. Accordingly, miscounting may be easily suppressed.

As in this embodiment, when the first fish 1d (1g) in the image of interest and the second fish 1e and 1f (1h and li) in past images one or more images before the image of interest satisfy the first tracking enabling condition, the labeling unit 32 preferably performs a tracking process to assign the same label as to the second fish 1e and 1f (1h and li) to the first fish 1d (1g), and the tracking process is preferably performed on the fish set as the target of addition before being performed on the fish that is not set as the target of addition.

With this configuration, even when the fish 1d which is a target of addition and the fish 1g which is not a target of addition intersect with each other in a current frame (image of interest), occurrence of swapping of labels (IDs) may be reduced or avoided.

As in this embodiment, the labeling unit 32 preferably estimates a position of the fish in the image of interest based on positions of the third fish 1k and 1L (1p and 1q) in past images N and N+1 (N is a natural number not less than 2) images before the image of interest and preferably assigns the same label as to the third fish 1k and 1L (1p and 1q) to the fourth fish 1j (1o) that satisfies the estimated fish position and the second tracking enabling condition among fish in the image of interest.

According to this configuration, even in a lost state in which a fish is unrecognizable in a past image immediately before the image of interest (1 to (N-1) images before the image of interest), tracking may be performed and the counting accuracy may be improved.

As in this embodiment, the labeling unit 32 preferably performs, when the first fish 1d (1g) in the image of interest and the second fish 1e and 1f in past images one or more images before the image of interest satisfy the first tracking enabling condition, the tracking process to assign the same label as to the second fish 1e and 1f (1h and li) to the first fish 1d (1g), and assigns a label as a new individual to the fifth fish 1u to which a label has not been assigned in the image of interest which has been subjected to the tracking process. The status setting unit 33 preferably sets the same status as a fish closest to the fifth fish 1u in a past image one image before the image of interest to the fifth fish 1u.

According to this configuration, when two fish overlap in a past image, the fish are recognized as one fish. Thereafter, when the fish advances and splits into two, the same status as that of a nearby fish is set to the new fifth fish 1u. Therefore, even when the fish 1t of a target of addition is branched so that the fifth fish 1u newly appears, the fifth fish 1u is also a target of addition, and therefore, omission of counting of a fish of a target of addition may be avoided or suppressed.

As in this embodiment, the fish counting system preferably includes a reporting unit 35 that reports to outside, when it is determined that an imaging condition is abnormal based on at least one image, that the imaging condition is abnormal.

According to this configuration, the number of images captured and counted under an abnormal imaging condition may be reduced, and miscounting may be reduced.

A program according to this embodiment causes one or more processors to execute the method described above. In addition, a computer readable transitory recording medium according to this embodiment stores the program described above.

Although each of the units 30 to 35 shown in FIG. 1 is realized by executing a predetermined program by a processor or processors, each of the units may be configured by a dedicated memory or a dedicated circuit.

In the system 3 of the embodiment above, although each of the units 30 to 35 is realized by a processor of a computer, each of the units 30 to 35 may be distributed and implemented by a plurality of computers or a cloud. That is, the above method may be performed by one or more processors.

Although embodiments of the present disclosure have been described above with reference to the drawings, the specific configurations should not be considered to be limited to these embodiments. The scope of the present disclosure is defined not only by the description of the above embodiments but by the scope of the claims, and further, all modifications that fall within a meaning and scope equivalent to the scope of the claims are included.

### INDUSTRIAL APPLICABILITY

The present invention may be employed in fish counting systems.

### DESCRIPTION OF REFERENCE NUMERALS

1 fish
3 fish counting system
30 image acquisition unit
31 extraction unit
32 labeling unit
33 status setting unit
34 counting unit
35 reporting unit
Ar1 first area
Ar2 second area
Ar3 third area

## Claims

1. A fish counting system comprising:
an image acquisition unit that acquires a plurality of images by imaging over time an imaging area in which fluid including a fish flows;
an extraction unit that extracts a fish for each image; and
a counting unit that counts the number of fish, wherein
the imaging area includes a first area and a second area, and
the counting unit counts the number of fish when the fish in the first area moved to the second area.

2. The fish counting system according to claim 1, comprising:
a labeling unit that assigns a label to an extracted fish to identify the fish; and
a status setting unit that sets a status to the fish to which the label is assigned, wherein
the status setting unit sets a status indicating a target of addition to the fish in the first area, and
the counting unit counts the fish when it is determined that the fish in the first area set as the target of addition moved to the second area.

3. The fish counting system according to claim 2, wherein the counting unit calculates the fish that moved through the second area to the first area when the fish is set as a target of subtraction.

4. The fish counting system according to claim 2 or 3, wherein the imaging area has a third area between the first and second areas.

5. The fish counting system according to claim 4, wherein
when a first fish in an image of interest and a second fish in a past image one or more images before the image of interest satisfy a first tracking enabling condition, the labeling unit performs a tracking process to assign the same label as to the second fish to the first fish, and
when the fish set as the target of addition moves to the second area after consecutively satisfying the first tracking enabling condition a predetermined number of times in the third area in the plurality of images, the counting unit counts the fish.

6. The fish counting system according to any one of claims 2 to 5, wherein
when a first fish in an image of interest and a second fish in a past image one or more images before the image of interest satisfy the first tracking enabling condition, the labeling unit performs a tracking process to assign the same label as to the second fish to the first fish, and
the tracking process is performed on the fish set as the target of addition before being performed on the fish that is not set as the target of addition.

7. The fish counting system according to any one of claims 2 to 6,
wherein the labeling unit estimates a position of the fish in the image of interest based on positions of third fish in past images N and N+1 images before the image of interest, N being a natural number not less than 2, and assigns the same label as to the third fish to the fourth fish that satisfies the estimated fish position and the second tracking enabling condition among fish in the image of interest.

8. The fish counting system according to any one of claims 2 to 7, wherein
the labeling unit
performs, when the first fish in the image of interest and the second fish in a past image one or more images before the image of interest satisfy the first tracking enabling condition, a tracking process to assign the same label as to the second fish to the first fish, and
assigns a label as a new individual to a fifth fish to which a label was not assigned in the image of interest which was subjected to the tracking process, and
the status setting unit sets the same status as a fish closest to the fifth fish in a past image one image before the image of interest to the fifth fish.

9. The fish counting system according to any one of claims 1 to 8, further comprising a reporting unit that reports to outside, when it is determined that an imaging condition is abnormal based on at least the single image, that the imaging condition is abnormal.

10. A fish counting method comprising:
acquiring a plurality of images by imaging over time an imaging area in which fluid including a fish flows,
extracting a fish for each image, and
counting the number of fish, wherein
the imaging area includes a first area and a second area, and
the counting the number of fish includes counting a fish when the fish in the first area moves to a second area.

11. A program that causes one or more processors to perform the fish counting method according to claim 10.
